## Europäisches Patentamt
## European Patent Office
## Office européen des brevets

(19)

(11) Numéro de publication: **0 178 988**
**B1**

(12) # FASCICULE DE BREVET EUROPEEN

(45) Date de publication du fascicule du brevet:
24.05.89

(51) Int. Cl.⁴: **E 21 B 17/042**, F 16 L 15/00

(21) Numéro de dépôt: 85401962.7

(22) Date de dépôt: 08.10.85

(54) Procédé et dispositif pour effectuer le vissage d'un joint fileté pour tube muni d'une butée.

(30) Priorité: 08.10.84 FR 8415403

(43) Date de publication de la demande:
23.04.86 Bulletin 86/17

(45) Mention de la délivrance du brevet:
24.05.89 Bulletin 89/21

(84) Etats contractants désignés:
BE DE FR GB IT NL SE

(56) Documents cités:
US-A- 2 094 491
US-A- 3 314 156
US-A- 3 745 820

PETROLEUM ENGINEER INTERNATIONAL, vol. 56, no.
3, mars 1984, pages 43,44,46,48,50,52, Dallas, Texas, US;
M. RAULINS: "How loading affects tubular thread
shoulder seals"

(73) Titulaire: **VALLOUREC Société Anonyme dite., 7, place
du Chancelier Adenauer, F-75116 Paris (FR)**

(72) Inventeur: **Grare, Didier René Marcel, 26, Allée des
Grands Chênes, F-59620 Aulnoye-Aymeries (FR)**
Inventeur: **Salkin, Hervé Yves-Marie Augustin, 16, rue
Louis Lumière, F-59620 Aulnoye-Aymeries (FR)**

(74) Mandataire: **Nony, Michel, Cabinet Nony 29, rue
Cambacérès, F-75008 Paris (FR)**

ACTORUM AG

## Description

La présente invention a pour objet un procédé et un dispositif pour effectuer le vissage d'un joint fileté pour tubes d'acier muni d'une butée et utilisable en particulier dans l'industrie pétrolière.

On sait que l'on utilise couramment dans l'industrie pétrolière des joints filetés pour tubes qui servent à réunir de manière étanche et amovible des sections de tubes qui sont placées les unes au bout des autres pour réaliser des colonnes.

De tels joints comportent des filetages mâles et femelles qui sont le plus généralement coniques (mais qui peuvent être parfois cylindriques), ainsi que des surfaces d'étanchéité qui viennent en contact lors du vissage du joint, et dans la plupart des cas, des butées de limitation de vissage qui ont pour but de faire croître brusquement le couple de vissage de manière à immobiliser les deux éléments du joint dans une position prédéterminée.

Selon l'état de la technique, le vissage des joints sur chantiers s'effectue en communiquant à l'un des éléments du joint par rapport à l'autre un couple de vissage qui se situe à l'intérieur d'un domaine prédéterminé par le fabricant du joint.

Or, cette manière de faire ne donne pas totalement satisfaction car pour un couple de vissage donné, les conditions de serrage du joint peuvent varier assez largement d'un joint à l'autre. En effet, en raison des tolérances de fabrication, provoquant notamment des différences de diamètres des filetages mâles et femelles, ainsi que des écarts de positionnement des butées de limitation de vissage par rapport aux filetages, le couple qui est nécessaire pour assurer par exemple le frettage des filetages coniques jusqu'à faire venir au contact les surfaces des butées de limitation de vissage, peut varier dans d'importantes proportions, le couple appliqué ensuite pour le serrage des butées de limitation de vissage variant de la même manière mais en sens inverse. De plus, les graisses qui sont utilisées pour le montage des joints ne présentent pas toutes les mêmes caractéristiques, ce qui fait également varier le couple absorbé par le frettage dans les filetages.

On comprend dans ces conditions, que des joints réputés identiques et vissés avec le même couple de serrage ne présentent pas les mêmes conditions de fiabilité selon qu'une fraction plus ou moins grande du couple total de serrage est absorbée par le frettage des filetages et/ou par le serrage des butées de limitation de vissage.

La présente invention concerne un nouveau procédé et un nouveau dispositif qui permettent d'appliquer sur le joint un couple prédéterminé après la mise en contact des butées de limitation de vissage, ce qui permet de s'assurer que tous les joints ainsi vissés présentent des caractéristiques identiques de montage et d'étanchéité.

Le document US-A-3 314 156 décrit un procédé pour réaliser le vissage d'un joint fileté pour tube d'acier destiné en particulier à l'industrie du pétrole, du type comportant un élément mâle à filetage externe et un élément femelle à filetage interne. La présente invention s'applique à un joint de ce type, dans lequel il existe au moins un couple de butées de limitation de vissage situées à l'intérieur de l'élément femelle le procédé selon l'invention est caractérisé par le fait qu'avant de procéder au vissage du joint, on applique sur la surface externe de l'élément femelle, à une certaine distance du plan de la butée de limitation de vissage et du côté dudit plan qui est opposé aux filetages, une jauge de contraintes qui permet de suivre instantanément les déformations longitudinales de la surface externe selon une génératrice de l'élément femelle et que l'on effectue le vissage du joint jusqu'à ce que l'indication fournie par la jauge de contraintes corresponde à une extension d'une valeur prédéterminée de la surface de l'élément femelle selon ladite génératrice au niveau de la jauge.

On connait selon l'état de la technique des jauges de contraintes qui mesurent la déformation à la surface d'un métal en étant simplement appliquées par pression contre ladite surface, cette pression suffisant à imposer à la jauge les déformations subies par la surface du métal.

Lors de la mise en œuvre du procédé tel que défini ci-dessus l'on constate tout d'abord, dans le cas d'un filetage tronconique, une légère compression longitudinale du métal à la surface de l'élément femelle jusqu'à ce que la butée de limitation de vissage de l'élément mâle vienne au contact de la butée de limitation de vissage de l'élément femelle. Dès ce moment, la butée de limitation de vissage de l'élément femelle est soumise à un couple de basculement qui tend à augmenter le diamètre de l'élément femelle au-delà du plan de ladite butée en provoquant une extension du métal sur la surface externe le long de la génératrice de l'élément femelle. C'est cette extension mesure la jauge, sa valeur maximale correspondant au couple de serrage que l'on doit appliquer sur la butée du joint.

Conformément à l'invention, dans le cas où l'on utilise des joints ayant un filetage tronconique, il est également avantageux de s'assurer que la déformation longitudinale de compression, qui est mesurée par la jauge de contraintes, n'excède pas une valeur prédéterminée, de manière à être certain qu'il ne s'exerce pas un couple trop important au niveau des filetages avant le contact des butées de limitation de vissage.

Dans le cas où l'on applique le procédé à un joint comportant des filetages cylindriques, il ne se produit aucune déformation de la surface de l'élément femelle avant que les butées de limitation de vissage ne viennent au contact, de telle sorte que pendant toute cette période, la jauge de contraintes ne fournit aucune indication. Par contre, dès que les butées de limitation de vissage viennent en contact il se produit une extension longitudinale progressive de la surface de l'élément femelle qui est visible grâce à la jauge de contraintes.

Conformément à l'invention la jauge de contraintes est placée de préférence à l'endroit de l'élément femelle subissant le maximum d'extension longitudinale, par exemple à 7 mm du plan de la butée de limitation de vissage.

La présente invention a également pour objet un dispositif pour mettre en œuvre le procédé décrit ci-dessus, dispositif caractérisé par le fait qu'il comporte en combinaison des moyens pour appliquer une jauge de contraintes en un endroit déterminé sur la surface externe de l'élément femelle d'un joint dont on procède au vissage, et des moyens par exemple de type connu pour mesurer les déformations longitudinales de ladite surface permettant d'interrompre le vissage du joint lorsque la jauge de contraintes montre une déformation d'extension longitudinale de la surface du métal de l'élément femelle qui est au moins égale à une valeur prédéterminée.

Selon l'invention, il est avantageux d'adjoindre au dispositif des moyens permettant de s'assurer que la déformation longitudinale de contraction de la surface de l'élément femelle qui précède l'extension dans le cas de filetages coniques ne dépasse une valeur prédéterminée, avant que les butées de limitation de vissage ne viennent en contact.

Dans le but de mieux faire comprendre l'invention on va en décrire maintenant à titre d'illustration et sans aucun caractère limitatif plusieurs modes de réalisation pris comme exemples et représentés sur le dessin annexé.

Sur ce dessin:

– la figure 1 est une vue schématique en coupe d'un joint comportant des filetages coniques et des butées de limitation de vissage à l'intérieur de l'élément femelle avant que ces dernieres ne viennent en contact,

– la figure 2 est une vue en coupe correspondant à la figure 1 au moment où le joint est totalement serré,

– la figure 3 est une vue schématique en perspective d'un dispositif selon l'invention,

– la figure 4 est une vue en coupe schématique du dispositif qui applique la jauge de contraintes sur le tube,

– la figure 5 est une vue représentant l'évolution théorique des déformations longitudinales de la surface de l'élément femelle du joint selon les figures 1 et 2,

– la figure 6 représente les déformations théoriques longitudinales de la surface de l'élément femelle d'un joint comportant des filetages cylindriques et des butées internes de limitation de vissage, et

– la figure 7 représente les courbes réelles du couple et des déformations de la surface externe de l'élément femelle relevées réellement sur un joint du type représenté sur les figures 1 et 2.

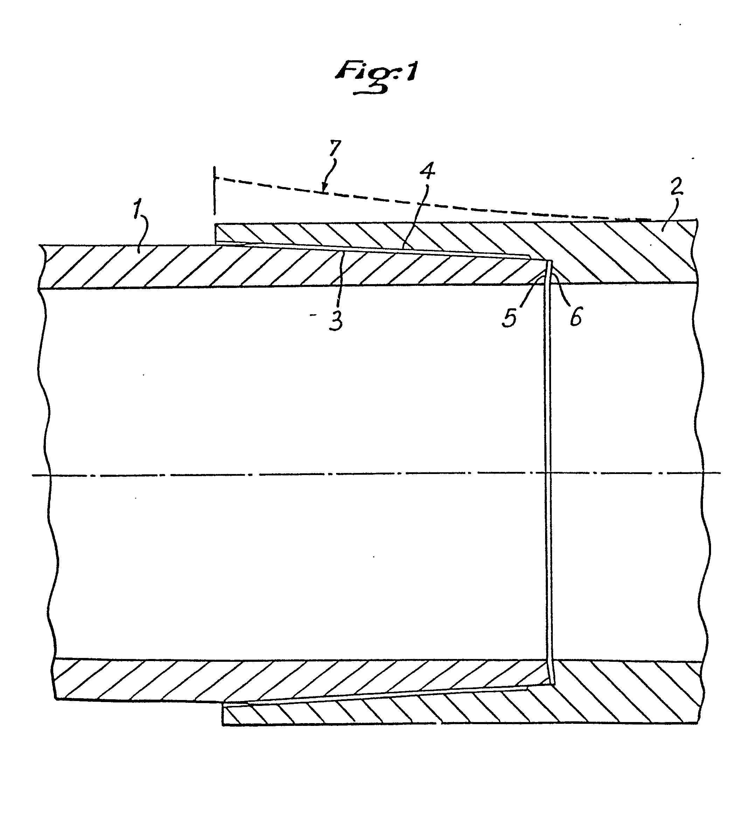

On voit sur la figure 1, schématiquement représenté en coupe, un joint tubulaire en acier destiné à l'industrie du pétrole qui comporte un élément mâle 1 et un élément femelle 2. Cet élément femelle 2 peut être constitué par un manchon qui comporte à son extrémité droite un filetage comme à son extrémité gauche ou encore par l'extrémité surépaissie d'une section de tube.

L'élément mâle 1 comporte un filetage tronconique externe 3, alors que l'élément femelle 2 comporte un filetage tronconique interne 4 de forme correspondante. L'élément mâle 1 comporte une butée 5 de limitation de vissage qui vient s'appliquer contre la butée 6 de limitation de vissage de l'élément femelle 2.

En raison du fait que l'élément mâle 1 possède au niveau des filetages 3 un diamètre supérieur au diamètre interne des filetages 4 de l'élément femelle 2, au fur et à mesure que l'on visse l'élément mâle 1 dans l'élément femelle 2 (et ceci jusqu'à ce que les surfaces 5 et 6 viennent au contact), il se produit un élargissement du diamètre de l'élément femelle 2 qui est représenté par la courbe en trait interrompu 7 sur la figure 1.

Il va de soi que les déformations représentées par la courbe 7 ont été fortement amplifiées de manière à être rendues visibles sur le dessin.

On remarque sur la figure 1 que la déformation (c'est-à-dire l'augmentation de diamètre de l'élément femelle) s'étend vers la droite au-delà du plan de la butée 6 de limitation de vissage.

Cette déformation en trompette de l'élément femelle se traduit par une contraction longitudinale de la surface externe de l'élément femelle (dans la direction d'une génératrice) et par une extension transversale de cette même surface externe (dans la direction perpendiculaire aux génératrices).

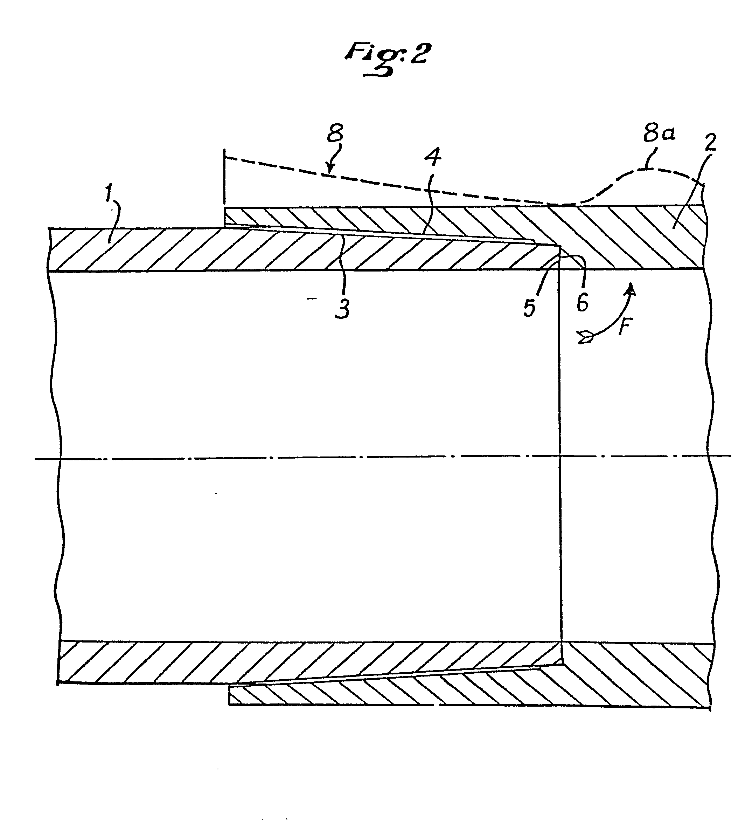

On a représenté sur la figure 2 le joint de la figure 1 après vissage complet du joint, c'est-à-dire après que l'on ait appliqué sur le joint un couple de serrage au-delà du moment où les butées 5 et 6 sont venues en contact l'une de l'autre.

On a représenté en trait interrompu sur la figure 2 la courbe 8 des déformations que subit dans cet état la surface externe de l'élément femelle 2.

On remarque que dans la partie de la courbe 8 qui se situe à gauche du plan de la butée 6 de limitation de vissage, l'évolution des déformations est sensiblement la même que sur la figure 1.

Par contre, à droite du plan de la butée 6 de limitation de vissage, on constate une déformation 8a en forme de bosse qui est due au fait que l'extrémité de l'élément mâle qui s'appuie sur la butée 6 a tendance à faire basculer l'élément femelle dans le sens de la flèche F.

Au niveau de cette bosse 8a de la courbe 8, la surface de l'élément femelle subit une extension longitudinale aussi bien qu'une extension transversale.

Conformément à la présente invention on utilise la mesure des déformations longitudinales de la surface de l'élément femelle à l'aide d'une jauge de contraintes qui est appliquée sur la surface de l'élément femelle pour déterminer le moment où le serrage du joint doit être arrêté.

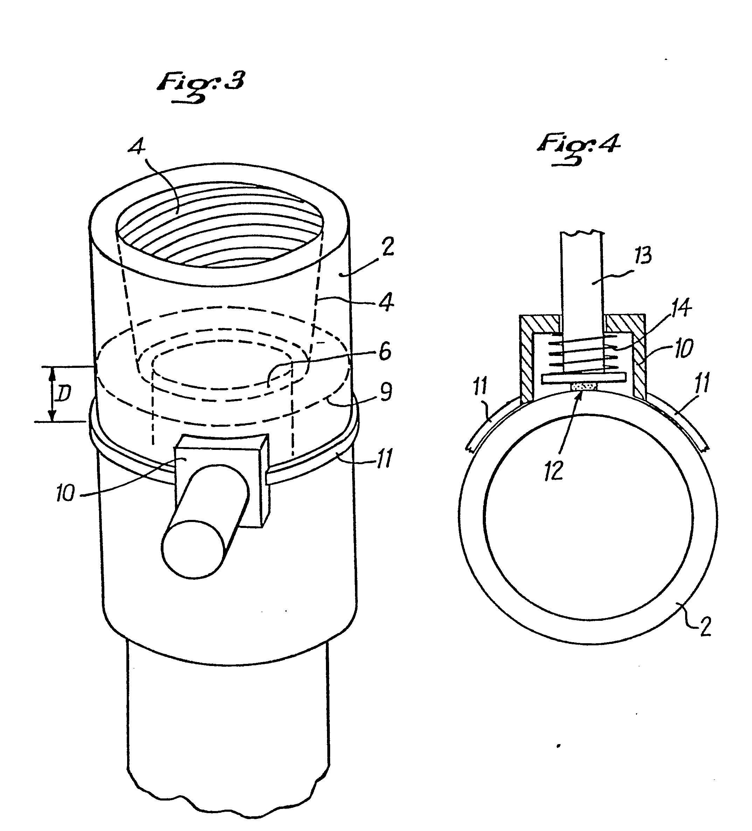

On a représenté schématiquement en perspective sur la figure 3 le dispositif qui permet de détecter les déformations superficielles longitudinales de la surface externe de l'élément femelle.

On retrouve sur la figure 3, l'élément femelle 2 qui est constitué par un manchon et qui comporte des filetages 4 à l'intérieur desquels doit s'engager l'extrémité de l'élément mâle 1. On a également représenté en trait interrompu la butée 6 de limitation de vissage ainsi que la trace 9 du plan de la butée 6 de limitation de vissage sur la surface externe de l'élément femelle 2.

La jauge de contraintes est appliquée sur la surface externe de l'élément femelle 2 grâce au dispositif 10 qui est fixé sur l'élément femelle par une sangle 11 schématiquement représentée.

On voit que la jauge de contraintes est disposée à une distance D du plan 6, 9 de la butée 6 de limitation de vissage du côté opposé à celui où se trouve le filetage 4 de l'élément femelle.

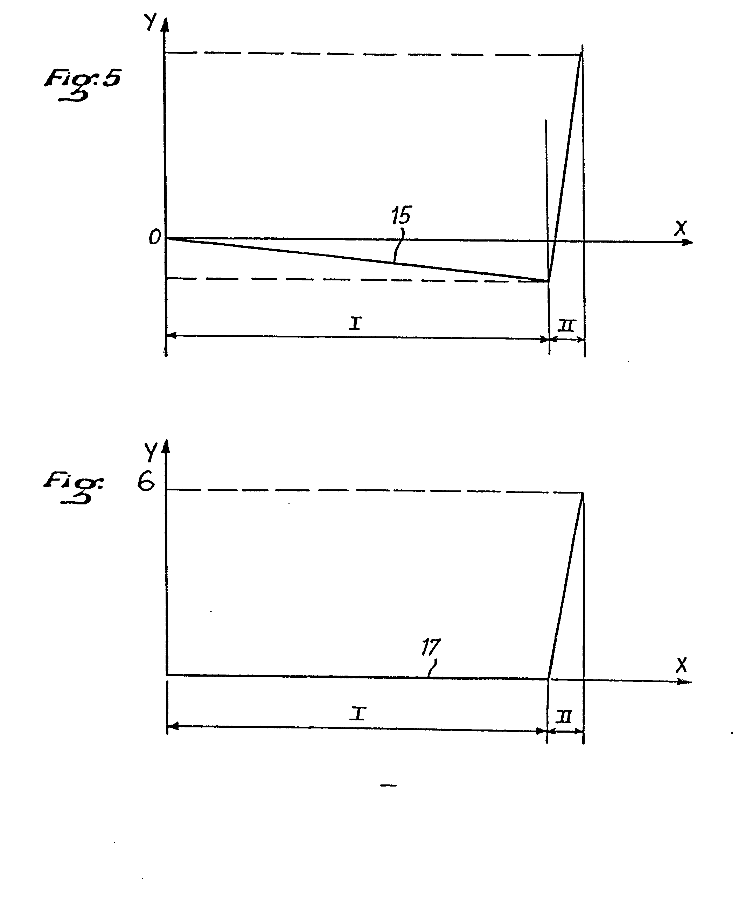

On a schématiquement représenté sur la figure 4 comment la jauge de contraintes 12 est appliquée sur la surface externe de l'élément femelle 2 en étant fixée sur une pièce 13 qui coulisse dans le bloc 10 assujetti sur le tube par la sangle 11 et est constamment repoussée par le ressort de rappel 14. La jauge de contraintes 12 est orientée de manière à mesurer les déformations longitudinales (c'est-à-dire dans une direction parallèle à l'axe du tube).

Il est bien entendu que les figures 3 et 4 ne sont que schématiques et que la jauge de contraintes 12 peut être appliquée de différentes manières sur l'élément femelle.

En particulier cette jauge de contraintes 12 peut être rendue solidaire du mors qui maintient l'élément femelle lors du vissage de l'élément mâle qui est alors entraîné en rotation.

On a représenté sur les figures 5 à 7 en abscisse X l'angle de rotation exercé entre l'élément mâle et l'élément femelle et en ordonné Y l'importance des déformations longitudinales de la surface externe de l'élément femelle lors du vissage.

La figure 5 représente l'évolution théorique de ces déformations qui sont mesurées par la jauge de contraintes dans le sens des génératrices.

On voit que la courbe 15 des déformations de la surface externe de l'élément femelle comporte une partie I descendante qui correspond à la période pendant laquelle l'élément mâle s'enfonce dans l'élément femelle en provoquant la déformation en trompette de la surface externe de cette dernière, ce qui produit une contraction longitudinale de la surface externe de l'élément femelle, alors que dans la partie II de la courbe 15 qui correspond à la période qui a suivi le contact des butées de limitation de vissage, la bosse 8a de la courbe 8 de la figure 2 se produit progressivement en provoquant une extension longitudinale de la surface externe de l'élément femelle 2.

On a représenté sur la figure 6 la courbe des déformations superficielles longitudinales de l'élément femelle dans le cas d'un joint comportant un filetage cylindrique et des butées de limitation de vissage, les déformations étant mesurées à une certaine distance de la butée de limitation de vissage du côté de celle-ci qui est opposée aux filetages.

On remarque que pendant toute la partie du vissage qui amène en contact les butées de limitation de vissage, il ne se produit aucune déformation de la surface de l'élément femelle en raison de l'absence de frettage dans les filetages, alors que dans la partie suivante II de la courbe il se produit une extension longitudinale de la surface de l'élément femelle comme dans le cas de la figure 5.

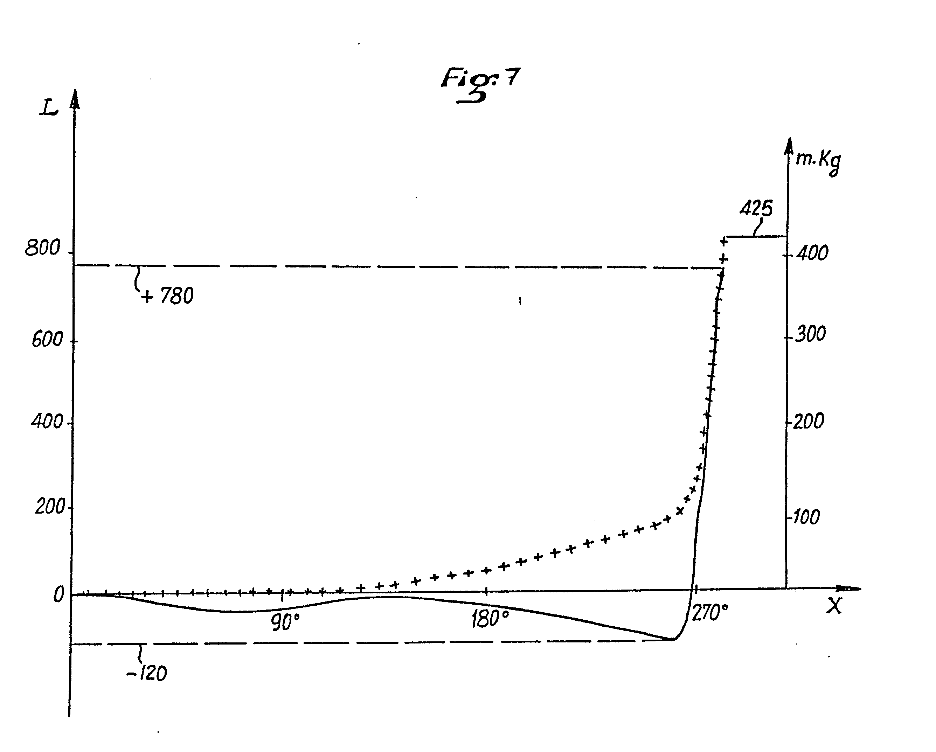

On a représenté sur la figure 7 les déformations de la surface externe de l'élément femelle d'un joint réel en même temps que le couple de serrage.

Comme dans le cas des figures 5 et 6, on a représenté en abscisse X la rotation relative de l'élément mâle par rapport à l'élément femelle exprimée en degrés, et en ordonné d'une part le couple de serrage m.kg appliqué, et d'autre part l'importance des déformations longitudinales L mesurées en mm x $10^{-6}$ (micro déformations) dans la direction des génératrices sur la surface externe de l'élément femelle.

Cette courbe correspond au vissage d'un joint du commerce qui est un tubing de 88,9 mm (3 pouces 1/2), de 13,7 kg/m (9,20 livres par pied) et qui est réalisé avec un acier de grade 80 VC13. La jauge de contraintes longitudinale est placée à 7 mm du plan de la butée de limitation de vissage de l'autre côté des filetages.

Sur la figure 7 on constate que le couple de vissage qui est représenté par des croix augmente légèrement puis de manière un peu plus forte jusqu'à environ 1000 Nm (100 m/kg), moment auquel les surfaces d'étanchéité puis les butées de limitation de vissage entrent en contact (angle de rotation de 270°) pour atteindre la valeur de 4250 Nm (425 m.kg).

Pendant toute la période de croissances lente et modérée du couple, la surface externe de l'élément femelle subit une contraction qui correspond à la zone I de la figure 5, puis une extension brusque qui monte en même temps que le couple (zone II de la figure 5).

Dans le cas présent, les ondulations de la zone I de compression s'expliquent par les tolérances d'usinage au niveau des filetages. La contraction atteint un minimum de −120 au moment où les surfaces d'étanchéité puis les butées de limitation de vissage viennent en contact (environ 260°) pour croître à un maximum d'extension de +780.

On voit donc, que conformément à l'invention en arrêtant le vissage du joint à une valeur d'extension de +780 on s'assure que le couple correct a été appliqué sur le joint à partir du moment où les butées de limitation de vissage sont venues en contact.

On peut par exemple utiliser le moment où la somme algébrique des signaux électriques représentant d'une part le couple et d'autre part la déformation longitudinale de l'élément femelle dépasse une valeur prédéterminée de faible valeur qui correspond à l'accostage des butées pour appliquer un supplément donné de couple de serrage ou une rotation prédéterminée par exemple.

De même, en s'assurant que la valeur minimale de la compression est inférieure à une valeur donnée (par exemple −200) on est certain que le frettage au niveau des filetages n'a pas été excessif.

On voit que le procédé et le dispositif selon l'invention permettent de réaliser de manière simple et économique le contrôle du vissage correct, ce qui est une garantie de bon fonctionnement du joint, c'est-à-dire de sa tenue et de son étanchéité.

## Revendications

1. Procédé pour réaliser le vissage d'un joint fileté pour tubes d'acier, destiné en particulier à l'industrie du pétrole, du type comportant un élément mâle (1) à filetage externe (3) et un élément femelle (2) à filetage interne (4), ainsi qu'au moins un couple de butées (5, 6) de limitation de vissage situées à l'intérieur de l'élément femelle (2), caractérisé par le fait qu'avant de procéder au vissage du joint, on applique sur la surface externe de l'élément femelle (2) à une certaine distance (D) du plan (9) de la butée de limitation de vissage et du côté dudit plan qui est opposé aux filetages (3, 4), une jauge de contraintes (12) qui permet de suivre instantanément les déformations longitudinales de la surface externe selon une génératrice de l'élément femelle (2), et que l'on effectue le vissage du joint jusqu'à ce que l'indication fournie par la jauge de contraintes (12) corresponde à une extension d'une valeur prédéterminée de la surface de l'élément femelle (2) selon ladite génératrice au niveau de la jauge.

2. Procédé selon la revendication 1, caractérisé par le fait que l'on place la jauge de contraintes (12) à une distance (D) du plan (9) de la butée (6) de limitation de vissage qui correspond au maximum d'extension longitudinale de la surface de l'élément femelle (2).

3. Procédé selon l'une quelconque des revendications 1 ou 2, caractérisé par le fait que l'on place la jauge de contraintes à une distance (D) comprise entre 5 et 20 mm du plan de la butée de limitation de vissage (9).

4. Procédé selon l'une quelconque des revendications précédentes, caractérisé par le fait que les filetages mâle (3) et femelle (4) ont une forme tronconique.

5. Procédé selon la revendication 4, caractérisé par le fait que lors du vissage et grâce aux indications fournies par la jauge de contraintes (12), on s'assure que la déformation longitudinale de compression qui se produit avant que les butées (5, 6) de limitation de vissage viennent en contact, n'excède pas une valeur prédéterminée.

6. Procédé selon l'une quelconque des revendications 1 à 5, caractérisé par le fait que l'on arrête le serrage du joint après avoir appliqué un supplément de couple donné ou une rotation angulaire donnée après le point où la somme algébrique des signaux électriques représentant le couple et la déformation longitudinale de l'élément femelle excède une valeur faible et prédéterminée.

7. Dispositif pour la mise en œuvre du procédé selon l'une quelconque des revendications précédentes, caractérisé par le fait qu'il comporte en combinaison des moyens (10, 11) pour appliquer une jauge de contraintes (12) en un endroit déterminé de la surface externe de l'élément femelle (2) du joint dont on procède au vissage, cette jauge étant disposée de manière à mesurer les déformations superficielles de l'élément femelle (2) dans le sens longitudinal selon une des génératrices de cet élément (2), et des moyens permettant d'interrompre le vissage du joint lorsque la jauge de contraintes (12) montre une déformation d'extension de la surface du métal de l'élément femelle qui est au moins égale à une valeur prédéterminée.

8. Dispositif selon la revendication 7, caractérisé par le fait qu'il comporte en outre des moyens permettant de s'assurer que la déformation longitudinale de contraction de la surface de l'élément femelle (2) ne dépasse pas une valeur prédéterminée.

## Patentansprüche

1. Verfahren zum Verschrauben einer Gewindeverbindung von Stahlrohren, insbesondere für die Erdölindustrie, wobei die Verbindung aus einem Bolzenelement (1) mit Aussengewinde (3) und einem Mutterelement mit Innengewinde (4) sowie mindestens einem Paar von Einschraubbegrenzungsflächen (5, 6) besteht, die sich im Innern des Mutterelementes befinden, dadurch gekennzeichnet, dass man vor dem Zusammenschrauben der Verbindung auf der Aussenfläche des Mutterelementes (2) in einem gewissen Abstand (D) von der Ebene (9) der Einschraubbegrenzung, und zwar auf der den Gewinden (3, 4) abgewandten Seite dieser Ebene einen Dehnungsmesser (12) anlegt, der es gestattet, umgehend den longitudinalen Deformationen auf der Aussenfläche des Mutterelementes längs einer Erzeugenden desselben zu folgen, und dass man die Verschraubung der Verbindung durchführt, bis die vom Dehnungsmesser (12) gegebene Anzeige einen vorgegebenen Wert der Dehnung der Oberfläche des Mutterelementes (2) längs der fraglichen Erzeugenden im Bereich des Dehnungsmessers entspricht.

2. Verfahren nach Anspruch 1, dadurch gekennzeichnet, dass man den Dehnungsmesser (12) in einem Abstand (D) von der Ebene (9) der Einschraubbegrenzungsfläche (6) anbringt, der dem Maximum der Längsdehnung auf der Oberfläche des Mutterelementes (2) entspricht.

3. Verfahren nach einem der Ansprüche 1 oder 2, dadurch gekennzeichnet, dass man den Dehnungsmesser in einem Abstand (d) zwischen 5 und 20 mm von der Ebene (9) der Einschraubbegrenzung anbringt.

4. Verfahren nach einem der vorhergehenden Ansprüche, dadurch gekennzeichnet, dass das Gewinde (3) des Bolzen- und das Gewinde (4) des Mutterelementes eine kegelige Form aufweisen.

5. Verfahren nach Anspruch 4, dadurch gekennzeichnet, dass man beim Verschrauben und gemäss der durch den Dehnungsmesser (12) gelieferten Anzeige sicherstellt, dass die Kompressionsdeformation in Längsrichtung, welche vor der Kontaktgabe der einschraubbegrenzenden Anschläge stattfindet, einen vorgegebenen Wert nicht überschreitet.

6. Verfahren nach einem der Ansprüche 1 bis 5, dadurch gekennzeichnet, dass man die weitere Verspannung der Verbindung einstellt, nachdem noch ein vorgegebenes Zusatzdrehmoment bzw. eine vorgegebene Winkeldrehung aufgebracht wurde, sobald der Punkt oder die algebraische Summe der elektrischen Signale, welche das Drehmoment und die longitudinale Deformation des Mutterelementes erzeugen, einen vorgegebenen geringen Wert überschreitet.

7. Vorrichtung zur Durchführung des Verfahrens nach einem der vorhergehenden Ansprüche, gekennzeichnet durch die Kombination von Mitteln (10, 11) zum Anbringen eines Dehnungsmessers (12) an einer vorgegebenen Stelle der Aussenfläche des Mutterelementes (2) der zu verschraubenden Verbindung, wobei der Dehnungsmesser so angebracht ist, dass er die Oberflächendeformationen des Mutterelementes (2) in Längsrichtung einer Erzeugenden dieses Elementes (2) misst, mit Mitteln, welche die Verschraubung der Verbindung zu unterbrechen gestatten, sobald der Spannungsmesser (12) eine Dehnungsdeformation der Metalloberfläche zeigt, die zumindest gleich einem vorgegebenen Wert ist.

8. Vorrichtung nach Anspruch 7, dadurch gekennzeichnet, dass sie ausserdem Mittel aufweist, die sicherstellen, dass die longitudinale Kontraktionsdeformation der Oberfläche des Mutterelementes (2) einen vorgegebenen Wert nicht überschreitet.

## Claims

1. A method of effecting the screwing tight of a threaded joint for steel pipes, which is intended in particular for the oil industry and is of the type including a male member (1) with an outer thread (3) and a female member (2) with an inner thread (4), as well as at least one pair of stops (5, 6) for limitation of screwing tight, situated inside the female member (2), characterized by the fact that before proceeding to screw the joint tight one applies to the outer surface of the female member (2) at a certain distance (D) from the plane of the stop for limitation of screwing tight and at the side of the said plane which is opposite to the threads (3, 4), a strain gauge (12) which enables the longitudinal deformations of the outer surface along a generatrix of the female member (2) to be followed instantaneously, and that the screwing tight of the joint is effected until the indication furnished by the strain gauge (12) corresponds with an extension of predetermined value of the surface of the female member (2) along the said generatrix at the level of the gauge.

2. A method as in Claim 1, characterized by the fact that the strain gauge (12) is placed at a distance (D) from the plane (9) of the stop (6) for limitation of screwing tight, which corresponds with the maximum longitudinal extension of the surface of the female member (2).

3. A method as in either of the Claims 1 or 2, characterized by the fact that the strain gauge is placed at a distance (D) lying between 5 and 20 mm from the plane (9) of the stop for limitating of screwing tight.

4. A method as in anyone of the preceding Claims, characterized by the fact that the male (3) and female (4) threads have a frustoconical shape.

5. A method as in Claim 1, characterized by the fact that at the time of screwing tight and thanks to the indications furnished by the strain gauge (12) it is ensured that the longitudinal deformation from compression which occurs before the stops (5, 6) for limitation of screwing tight come into contact, does not exceed a predetermined value.

6. A method as in anyone of the Claims 1 to 5, characterized by the fact that tightening of the joint is stopped after having applied a given additional torque or a given angular rotation beyond the point at which the algebraic sum of the electrical signals representing the torque and the longitudinal deformation of the female member exceeds a low predetermined value.

7. A device for implementing the method as in any one of the preceding Claims, characterized by the fact that it includes in combination means (10, 11) of applying a strain gauge (12) at a certain place on the outer surface of the female member (2) of the joint which one is proceeding to screw tight, this gauge being arranged so as to measure the surface deformations of the female member (2) in the longitudinal direction along one of the generatrices of this member (2), and means enabling the screwing tight of the joint to be interrupted when the strain gauge (12) shows a deformation from extension of the surface of the metal of the female member, which is at least equal to a predetermined value.

8. A device as in Claim 7, characterized by the fact that it includes in addition means enabling it to be ensured that the longitudinal deformation from contraction of the surface of the female member (2) does not exceed a predetermined value.

*Fig:1*

Fig. 2

Fig. 3

Fig. 4

Fig.5

15

0

X

I

II

Fig. 6

17

I

II

X

Fig. 7

EP 0 178 988 B1